# EUROPEAN PATENT APPLICATION

(11) **EP 1 293 979 A1**
(43) Date of publication of application: **19.03.2003**
(21) Application number: 01650104.1
(22) Date of filing: 12.09.2001
(51) Int. Cl.: G11B 23/40

(54) **Disc individualisation system**

(71) Applicant: Bronway Research Limited, Dublin 18 (IE)
(72) Inventor: O'Malley, Martin, Dunlaoghaire, County Dublin (IE); Dolan, Martin, Enniskerry, Co Wicklow (IE); O'Neil, Sean, Dublin 9 (IE); Bland, Anthony, Sharnbrook, Bedford MK44 1PS (GB); Sanby, Christopher, Blisworth, North Hants, NN7 3DN (GB)
(74) Representative: O'Brien, John Augustine

(57) **Abstract**

A system for individualisation of optical media comprises a printing station 29 having a printer for printing an individualised identifier on a print receiving area of a disc 3. A disc 3 is orientated at an orientation station 27 for presentation of the print receiving area to the printer. At a print checking/verification station 30 the information printed in the disc 3 is verified to ensure that the information printed on the disc corresponds to the information sent to the printer and that the information is legible.

## Description

### Introduction

The invention relates to an automated system for printing an optical media so that each medium can be uniquely individualised.

Optical media are commonly referred to as discs. In this specification references to optical media or discs include but are not limited to any of CD, CD-R, CD-RW, DVD, DVD-R, DVD-RW, DVD + RW, business card CD/DVD, 80mm CD/DVD, 65mm CD/DVD, FMD and all other mediums for storing or retrieving data of whatever nature, using optical methods or techniques.

Individualisation of optical media has been a desirable objective for some time. However, there is currently no high volume production system to provide detailed individualisation. Individualisation would be very useful in a wide range of applications such as in providing a disc with a unique identifier such as a customers name and address. Such details could be used with window envelopes for posting discs directly to customers.

### Statements of Invention

According to the invention there is provided a system for individualisation of optical media comprising:-
a printing station having a printer for printing an individualised identifier on a print receiving area of a disc; and
an orientation station to orientate the disc for presentation of the print receiving area to the printer.

In one embodiment the system comprises a print checking station.

Preferably the printing station is spaced-apart from the orientation station and the system comprises an indexing table for delivery of discs between the stations.

In one embodiment the orientation station comprises a camera for photographing the disc, a processor for calculating a disc offset from a desired orientation and a motor for turning the disc into the desired orientation. Ideally the disc is turned into the desired orientation at the orientation station.

Preferably the system comprises illumination means to illuminate the disc for photographing.

The illumination means preferably comprises a light source and a diffuser for diffusing the light to illuminate the disc. In one embodiment the diffuser comprises a diffusing body having a generally conical cut-away portion extending outwardly from an upper light inlet end to a lower disc illuminating end. Preferably the surface of the diffusing body defining the cone is curved outwardly adjacent to the disc illuminating end thereof.

In one embodiment the light source is a ring light. Preferably the light source is a light emitting diode array.

In one embodiment the motor comprises a servo motor.

Preferably the orientation station comprises means for raising a disc from an indexing table to a photographing position above the table. Ideally the photographing position is defined by a transparent plate towards which the disc is raised to be photographed.

Preferably the disc is rotated for orientation when the disc is in the raised position. Ideally the disc is rotated relative to the transparent plate by the motor for orientation of the disc.

In one embodiment the printer is a thermal transfer ribbon printer or other suitable printer.

In a preferred aspect the system comprises a print validation station. Preferably the print validation system comprises a vision system to validate the quality of the information printed on the disc.

In another aspect the system comprises a centering station for centering the disc prior to the orientation station.

In a preferred embodiment the indexing table comprises a number of disc receiving recesses, the indexing table being turned to deliver a disc from one station to another.

The system preferably comprises an infeed spindle for discs to be printed and, preferably an outfeed spindle for verified printed discs.

In a preferred embodiment the system comprises a reject spindle for receiving rejected discs.

Preferably the system comprises a code verifier for verifying coded infeed discs.

In one embodiment the system comprises a disc handler for moving discs from the infeed spindle to an indexing table for delivery to the orientation station. Preferably the handler is movable for delivery of an infeed disc to a code verifier before placement on the indexing table. The handler is preferably movable for delivery of a verified printed disc to an outfeed spindle. The handler may be movable for delivery of a rejected disc from the indexing table to the reject spindle.

In another aspect the invention provides an orientation system for orientating an optical medium comprising a disc receiver, a camera above the disc receiver for photographing the disc, a processor for calculating a disc offset from a desired orientation, and a motor for turning the disc into a desired orientation below the camera.

Preferably the orientation system comprises illuminating means to illuminate the disc for photography.

Preferably the illumination means comprises a light source and a diffuser for diffusing the light to illuminate the disc. Ideally the diffuser comprises a diffusing body having a generally conical cut-away portion extending outwardly from an upper light inlet end to a lower disc illuminating end. Preferably the surface of the diffusing body defining the cone is curved outwardly adjacent to the disc illuminating end thereof. Typically the light source is a ring light, preferably the light source is a light emitting diode array.

In one embodiment the motor or a stepper motor comprises a servo motor. Preferably the orientation station comprises means for raising a disc from an indexing table to a photographing position above the table. Ideally the photographing position is defined by a transparent plate towards which the disc is raised to be photographed.

In one embodiment the disc is rotated for orientation when the disc is in the raised position. Preferably the disc is rotated relative to the transparent plate by the motor for orientation of the disc.

The printer may be a thermal transfer ribbon printer.

Another aspect of the invention provides a method for individualisation of optical media comprising:-
loading a disc;
orientating the disc;
printing individualisation data on the orientated disc;
validating the data printed on the disc; and
unloading the validated printed disc.

Preferably the method comprises the step, prior to printing, of validating the disc.

In one embodiment the disc is orientated by:-
photographing the disc;
comparing the photograph of the disc with a desired orientation of the disc;
calculating an offset of the disc from the desired orientation; and
turning the disc by an amount corresponding to the offset to move the disc into desired orientation.

Preferably the method comprises the steps of:-
photographing the orientated disc, and, if necessary, turning the disc to more closely align the disc into the desired orientation.

In one embodiment the method comprises the steps of photographing the orientated disc, and rejecting the disc if the disc is not in the desired orientation.

The disc may be rejected prior to printing or after printing.

In a preferred embodiment the method comprises extracting individualisation data for printing from a database.

Preferably the method comprises generating a predictive map of where the individual characters will be located relative to one another in an image plane, and validating the printed image based on the predictive map.

Preferably the method comprises validating the printed data by a multi-classifier method. The classifier may be a neural network based classifier.

In one embodiment the validation comprises validating based on a single classifier per character of the printed image.

Preferably the method comprises training the classifier with a series of components which it is not and a series of examples which it is, the classifier having one output corresponding to an expected character and a second output corresponding to an unexpected character.

### Brief Description of the Drawings

The invention will be more clearly understood from the following description thereof given by way of example only with reference to the accompanying drawings, in which:-
Fig 1 is a perspective view of a system for individualisation of optical media according to the invention;
Fig 2 is a plan view of the system of Fig 1;
Fig 3 is an elevational view in the direction of the arrow A in Fig 1;
Fig 4 is an elevational view in the direction of the arrow B in Fig 1;
Fig 5 is a cross sectional view of an orientation system of the invention; and
Fig 6 is a view of detail C of Fig 5 on an enlarged scale

### Detailed Description

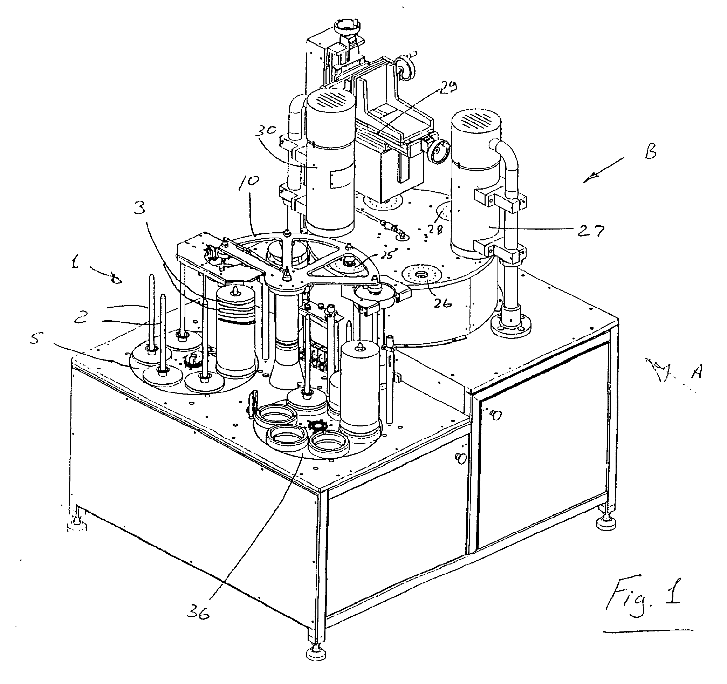

Referring to the drawings there is illustrated a system for individualisation of optical media. The system comprises an input disc handler provided by a loader or changer 1, in this case having six spindles 2. A plurality of input discs 3 are mounted on each spindle 2. Only some of the individual discs are illustrated in Figure 1. The discs 3 are placed onto industry standard spindles with collets and are then placed into the six spindle loader or changer 1. A spindle 2 is moved into a loading position by an indexing table 5.

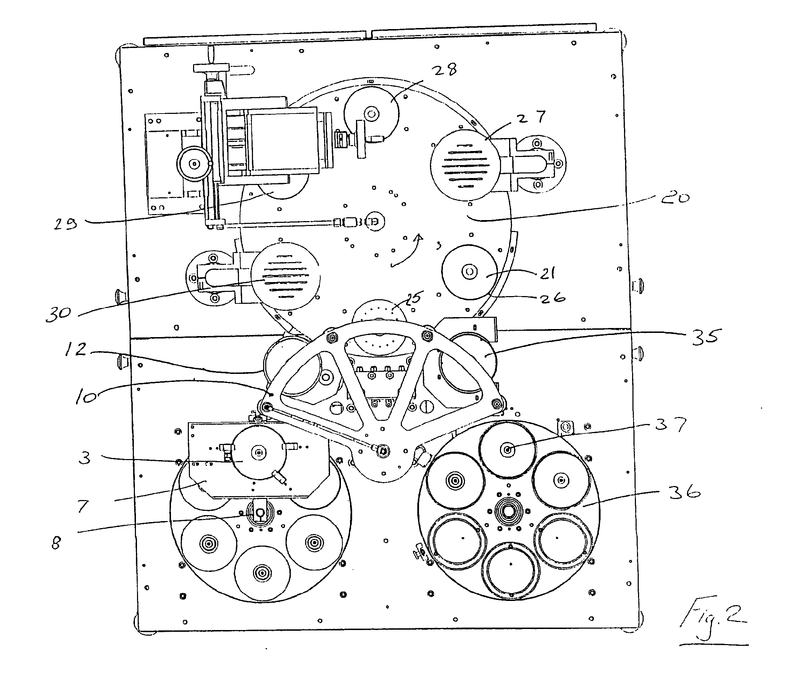

A disc 3 is moved to a pick point (Fig 2) by a pneumatic arm 7 mounted on a lead screw 8. The top position of the discs is determined by a sensor system, which detects the leading disc. The sensor system instructs a lead screw drive when the height of the disc stack is low and the lead screw motor drives the disc to the pick position.

An individual disc 3 is then handled by a disc input/output pick and place unit. The pick and place unit comprises a reciprocating robotic arm 10 which can handle a number of discs at the same time. Assuming that all stations are unloaded the first location of the arm 10 is the pick up point of the six spindle loader or changer 1. The disc is then moved by the arm 10 to a code verifying station 12 at which a bar code imprinted on the disc is checked to ensure that the disc to be printed matches database information to be printed on the disc. A code checked disc is then placed by the robotic arm onto a rotary indexing table 20. The indexing table 20 is a six position dial which is used to present discs to various operations located around the table. The table 20 has six disc receiving recesses 21 which are circumfenectially spaced-apart around the table. The table 20 is moved in an anti-clockwise direction to deliver discs sequentially to a number of different stations at which various operations are performed. A first station 25 is a centering station having a centering pin to ensure that a disc is placed accurately before movement to the next station. The second station 26 is free. The third station is an orientation station 27 at which a disc is orientated for presentation to a printing station 29. The fourth station 28 is free. At the printing station 29 an individualised identifier is printed on an orientated print receiving area of a disc. The sixth station is a print checking/verification station 30 which verifies that the information printed on the disc corresponds to the information sent to the printer and that the information is legible.

The robotic arm 10 delivers printed verified discs either to a holding point 35 or to an output spindle 36 of a six spindle unloader 37.

The holding point 35 can either be an intermediate holding point for good discs or a reject disc station to which rejected discs are delivered.

The overall system is controlled by a master PLC which manages the various sub-systems. Individualisation information to be printed onto the discs is provided in the form of a database in a known format.

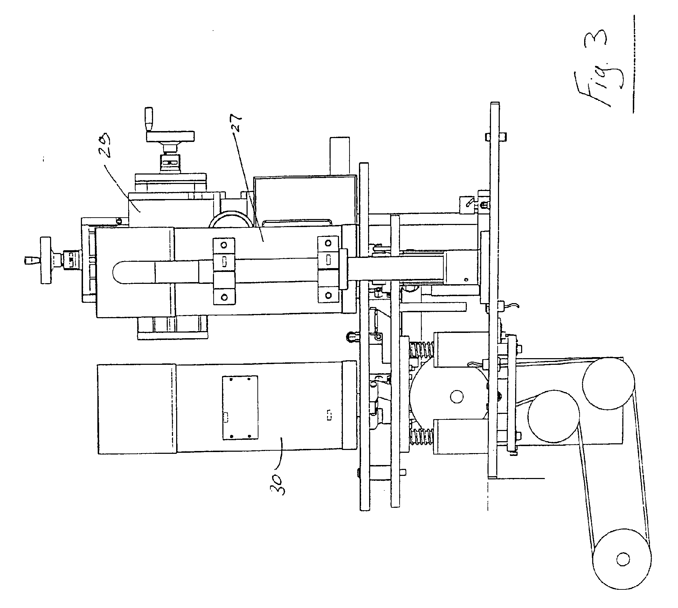

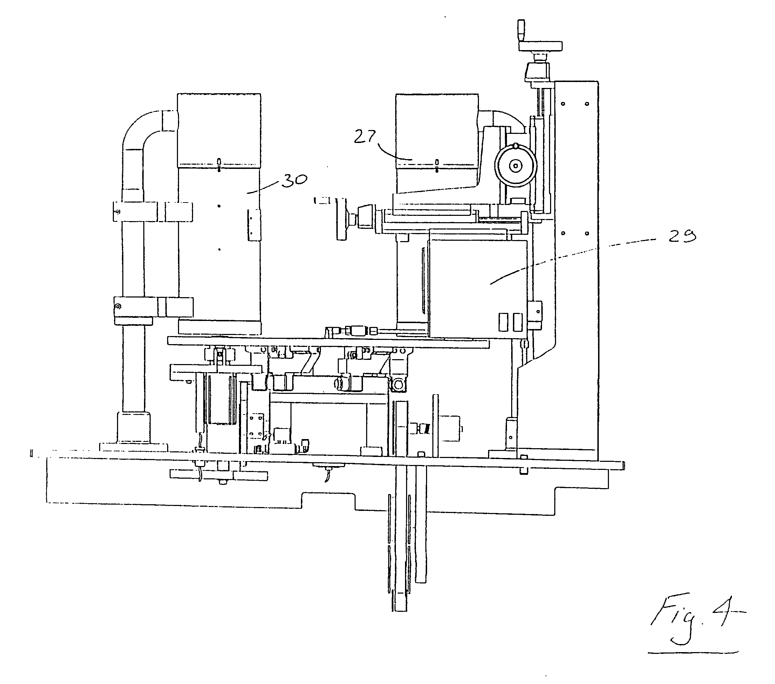

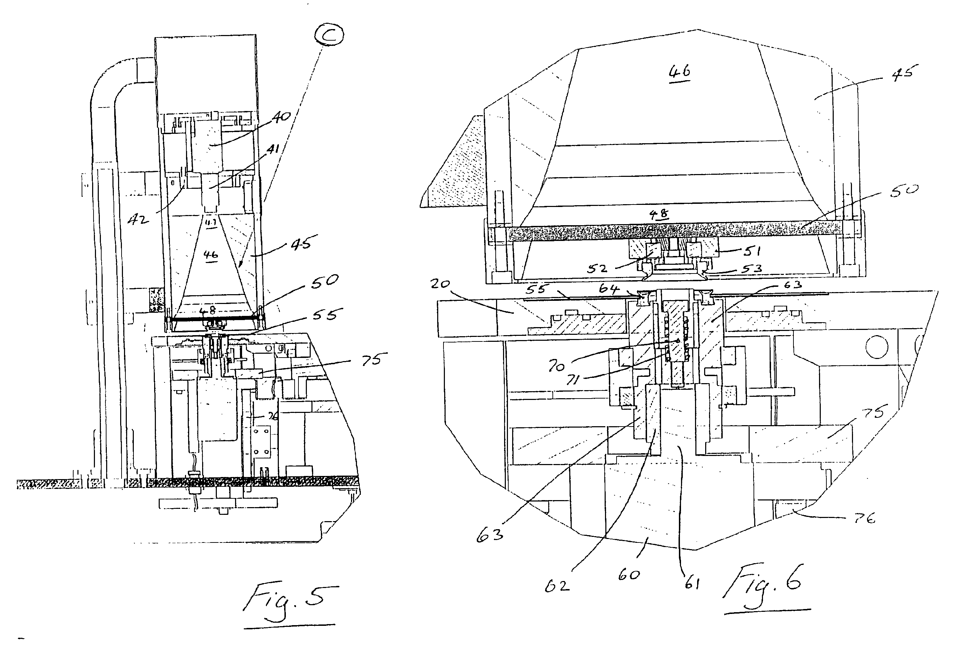

In more detail, and referring in particular to Figs 3 to 6 the orientation station 27 comprises a camera 40 with a lens 41 for photographing a disc. Illumination means for illuminating the disc comprises a light source, in this case a ring light emitting diode array 42. The light is diffused through a perspex diffuser body 45. The diffuser body 45 has a generally conical cut out portion 46 extending outwardly from an upper inlet end 47 to a lower outlet end 48 adjacent to a disc to be illuminated. It will be noted that the surface of the diffusing body 45 is curved outwardly somewhat in a parabolic shape adjacent to the disc illuminating end. This ensures that the disc is evenly illuminated. The disc illuminating end 48 of the diffuser has a transparent glass plate 50 with an anti-reflective coating on both sides. A block 51 is fixed to the plate 50 and a bearing 52 is freely rotatable in the block 51. The bearing 52 carries an annular seal 53 of elastometric material.

A disc to be orientated is positioned in a recess 55 in the indexing table 20 below the seal 53. The disc is rotated by a servo motor 60 having an upwardly projecting shaft 61 with a bushing 62 fixed thereto. The bushing 62 is, in turn, fixed to a block 63 having an upwardly opening recess fixedly housing a vacuum operated cup 64 which, on activation, engages the underside of a disc at the orientation station. A ram 70 has a spring 71 to ensure that the ram does not exert excessive pressure on the glass plate 50.

A support plate 75 is raised and lowered by a cam 76. The support plate 75 raises a disc up and engages the disc against the seal 53 on the idling hub. The disc is effectively gripped to allow the servo motor shaft 61 to turn the disc to a desired position.

The optical media orientation system is an in-place orientation system with a validation stage which means that the optical media under test is illuminated, photographed and digitised into an image that can be processed by a computer system using image analysis techniques. The orientation of the optical media orientation is determined and an offset calculated. The optical media is then rotated by a closed loop servo system by the calculated offset to a user defined position. The optical media is then re-photographed to validate that the orientation task has been successfully completed. This task is performed while the optical media is located at an orientation station where all operations are performed. The orientation station includes all the illumination systems, camera systems and servo systems necessary for the implementation of the application. The capture of a second image or photograph to validate the position of the optical media after orientation ensures that the printing of information on the optical media is located in the correct position and in effect forms a closed loop control system.

The print verification system is a vision system that is integrated with a database system that provides the information to be printed on the disc. The function of the vision system is to validate the quality of the information printed on the disc.

The information to be printed is extracted from a database. This information is processed and used to generate a predictive map on where the characters will be located relative to each other in the image plane. This information is then used to drive the inspection process once the image has been obtained.

The inspection is performed using a Neural Network based classifier. Instead of using a single classifier to identify the characters, a multi-classifier method is adopted to provide greater discrimination between characters. This has implications for the FONT classifier training method, which becomes more sophisticated.

Apriori information extracted from the database is used to locate the position of printed characters prior to printing on the disc. This is very helpful in speeding up the verification process.

Font training is performing by printing the desired character set and building up reference images to each character in the FONT set. This is typically performed once. Any font type within a reasonable range can be accommodated.

The classification method employed is a neural network based classifier. Multiple classifiers are employed so that discrimination between characters is increased. Thus, each classifier is training with a series of components which it is not and a series of examples which it is. In the invention each classifier has two outputs, one stating that it is the expected character and stating that it is not the expected character.

This multi-classifier approach to character recognition and verification greatly speeds up the verification step.

The invention is not limited to the embodiments hereinbefore described which may be varied in detail.

## Claims

1. A system for individualisation of optical media comprising:-
a printing station having a printer for printing an individualised identifier on a print receiving area of a disc; and
an orientation station to orientate the disc for presentation of the print receiving area to the printer.

2. A system as claimed in claim 1 comprising a print checking station.

3. A system as claimed in claim 1 or 2 wherein the printing station is spaced-apart from the orientation station and the system comprises an indexing table for delivery of discs between the stations.

4. A system as claimed in any preceding claim wherein the orientation station comprises a camera for photographing the disc, a processor for calculating a disc offset from a desired orientation and a motor for turning the disc into the desired orientation.

5. A system as claimed in claim 4 wherein the disc is turned into the desired orientation at the orientation station, preferably the system comprises illumination means to illuminate the disc for photographing, preferably the illumination means comprises a light source and a diffuser for diffusing the light to illuminate the disc.

6. A system as claimed in claim 5 wherein the diffuser comprises a diffusing body having a generally conical cut-away portion extending outwardly from an upper light inlet end to a lower disc illuminating end, preferably the surface of the diffusing body defining the cone is curved outwardly adjacent to the disc illuminating end thereof.

7. A system as claimed in any of claims 5 or 6 wherein the light source is a ring light, preferably the light source is a light emitting diode array.

8. A system as claimed in any of claims 4 to 7 wherein the orientation station comprises means for raising a disc from an indexing table to a photographing position above the table, preferably the photographing position is defined by a transparent plate towards which the disc is raised to be photographed, preferably the disc is rotated for orientation when the disc is in the raised position, preferably the disc is rotated relative to the transparent plate by the motor for orientation of the disc.

9. A system as claimed in any preceding claim comprising a print validation station, preferably the print validation system comprises a vision system to validate the quality of the information printed on the disc.

10. A system as claimed in any preceding claim including a centering station for centering the disc prior to the orientation station.

11. A system as claimed in any of claims 3 to 10 wherein the indexing table comprises a number of disc receiving recesses, the indexing table being turned to deliver a disc from one station to another.

12. A system as claimed in any preceding claim comprising an infeed spindle for discs to be printed and, preferably an outfeed spindle for verified printed discs.

13. A system as claimed in any preceding claim comprising a reject spindle for receiving rejected discs.

14. A system as claimed in claims 12 or 13 comprising a code verifier for verifying coded infeed discs.

15. A system as claimed in any of claims 12 to 14 comprising a disc handler for moving discs from the infeed spindle to an indexing table for delivery to the orientation station, preferably the handler is movable for delivery of an infeed disc to a code verifier before placement on the indexing table, preferably the handler is movable for delivery of a verified printed disc to an outfeed spindle, preferably the handler is movable for delivery of a rejected disc from the indexing table to the reject spindle.

16. An orientation system for orientating an optical medium comprising a disc receiver, a camera above the disc receiver for photographing the disc, a processor for calculating a disc offset from a desired orientation, and a motor for turning the disc into a desired orientation below the camera.

17. An orientation system as claimed in claim 16 comprising illuminating means to illuminate the disc for photography, preferably the illumination means comprises a light source and a diffuser for diffusing the light to illuminate the disc, preferably the diffuser comprises a diffusing body having a generally conical cut-away portion extending outwardly from an upper light inlet end to a lower disc illuminating end, preferably the surface of the diffusing body defining the cone is curved outwardly adjacent to the disc illuminating end thereof, preferably the light source is a ring light, preferably the light source is a light emitting diode array, preferably the motor comprises a servo motor or a stepper motor, preferably the orientation station comprises means for raising a disc from an indexing table to a photographing position above the table, preferably the photographing position is defined by a transparent plate towards which the disc is raised to be photographed, preferably the disc is rotated for orientation when the disc is in the raised position, preferably the disc is rotated relative to the transparent plate by the motor for orientation of the disc, preferably the printer is a thermal transfer ribbon printer.

18. A method for individualisation of optical media comprising:-
loading a disc;
orientating the disc;
printing individualisation data on the orientated disc;
validating the data printed on the disc; and
unloading the validated printed disc.

19. A method as claimed in claim 18 comprising the step, prior to printing, of validating the disc.

20. A method as claimed in claim 18 or 19 wherein the disc is orientated by:-
photographing the disc;
comparing the photograph of the disc with a desired orientation of the disc;
calculating an offset of the disc from the desired orientation; and
turning the disc by an amount corresponding to the offset to move the disc into desired orientation.

21. A method as claimed in claim 20 comprising the steps of:-
photographing the orientated disc, and, if necessary, turning the disc to more closely align the disc into the desired orientation.

22. A method as claimed in claim 20 or 21 comprising the steps of photographing the orientated disc, and rejecting the disc if the disc is not in the desired orientation.

23. A method as claimed in claim 22 wherein the disc may be rejected prior to printing, or after printing.

24. A method as claimed in any of claims 18 to 23 comprising extracting individualisation data for printing from a database.

25. A method as claimed in claim 24 comprising generating a predictive map of where the individual characters will be located relative to one another in an image plane, and
validating the printed image based on the predictive map.

26. A method as claimed in any of claims 18 to 25 comprising validating the printed data by a multi-classifier method, preferably the classifier is a neural network based classifier, preferably the validation comprises validating based on a single classifier per character of the printed image, preferably the method comprises training the classifier with a series of components which it is not and a series of examples which it is, the classifier having one output corresponding to an expected character and a second output corresponding to an unexpected character.
